# EUROPEAN PATENT APPLICATION

(11) **EP 3 021 414 A1**
(43) Date of publication of application: **18.05.2016**
(21) Application number: 14823535.1
(22) Date of filing: 31.01.2014
(51) Int. Cl.: H01M 10/0566, H01G 11/58, H01M 6/16

(54) **NONAQUEOUS ELECTROLYTE SOLUTION KIT AND METHOD FOR PREPARING NONAQUEOUS ELECTROLYTE SOLUTION**

(30) Priority: 09.07.2013 JP 2013143826
(71) Applicant: UBE Industries, Ltd., Yamaguchi 755-8633 (JP)
(72) Inventor: ABE, Koji, Ube-shi Yamaguchi 755-8633 (JP); FUJIMURA, Osamu, Ube-shi Yamaguchi 755-8633 (JP)
(74) Representative: Gille Hrabal
(86) International application number: PCT/JP2014/052231
(87) International publication number: WO 2015/004931

(57) **Abstract**

Provided is a non-aqueous electrolytic solution kit having plural non-aqueous electrolytic solutions having different compositions, and vessels containing: a base non-aqueous electrolytic solution in which an electrolyte salt is dissolved in at least a non-aqueous solvent selected from cyclic carbonate, chain ester, and a mixture of cyclic carbonate and chain ester; and a non-aqueous electrolytic solution for adjustment having a different composition from the composition of the base non-aqueous electrolytic solution, in which at least one of the vessels is constituted so as to be capable of weighing the inner capacity.

## Description

### TECHNICAL FIELD

The present invention relates to a non-aqueous electrolytic solution kit and a method of preparing a non-aqueous electrolytic solution using the non-aqueous electrolytic solution kit.

### BACKGROUND ART

In recent years, an energy storage device, particularly a lithium secondary battery is widely used as a power source of an electronic equipment such as a cellular phone and a note type personal computer, or as a power source or power storage of an electric vehicle.

A lithium secondary battery mainly consists of a positive electrode and a negative electrode containing materials which can absorb and release lithium, and a non-aqueous electrolytic solution including a lithium salt and a non-aqueous solvent. As the non-aqueous solvent, an organic solvent is used such as cyclic carbonate, chain carbonate, chain carboxylic acid ester, lactone and ether. The non-aqueous electrolytic solution is an important material indispensable in order to elicit performances of a lithium secondary battery.

Such non-aqueous electrolytic solution is generally prepared in an optimal composition by combining usually plural non-aqueous solvents suitably in order to satisfy use or necessary performances of a lithium secondary battery. However, non-aqueous conditions are necessary in implementing preparation of such non-aqueous electrolytic solution, and accordingly, well-ordered facility environments are necessary in the preparation (for example, see Patent Document 1).

For example, it is necessary to dissolve a lithium salt as an electrolyte in a non-aqueous solvent in preparing a non-aqueous electrolytic solution, which involves heat of dissolution of the lithium salt. Thus, in order to suppress deterioration or compositional change of the non-aqueous electrolytic solution by such generation of heat and further secure safety, it is necessary to prepare the non-aqueous electrolytic solution under non-aqueous conditions while cooling the non-aqueous electrolytic solution. Further, some of non-aqueous solvents generally used as a non-aqueous solvent for a lithium secondary battery is solid at ordinary temperature (for example, ethylene carbonate and the like). In the case of using such non-aqueous solvent that is solid at ordinary temperature, it is necessary to once heat the non-aqueous solvent above the melting point before use. In addition, an organic additive or the like is added to a non-aqueous electrolytic solution in order to improve battery performance in general. That is, non-aqueous conditions are necessary in performing many processes in preparing a non-aqueous electrolytic solution, and further temperature change and the like are also involved. Thus, it is notably difficult for a non-specialist in preparation of a non-aqueous electrolytic solution to prepare a non-aqueous electrolytic solution in a desired composition.

In addition, with a conventional method of preparing a non-aqueous electrolytic solution (method of changing the composition of an electrolytic solution by adding the electrolytic solution to a solvent), it was not simple to change only the composition of the solvent without change of the concentration of an electrolyte salt, although it was possible to adjust only concentration of the electrolyte salt.

### PRIOR ART DOCUMENTS

### PATENT DOCUMENTS

Patent Document 1: JP 2005-108531 A

### SUMMARY OF THE INVENTION

### PROBLEM TO BE SOLVED BY THE INVENTION

In regards to this, in recent years, research and development of a lithium secondary battery have been widely implemented by universities, public research institutes, and many companies (not only battery makers and chemical makers, but also electrical machinery makers, electric equipment makers other than battery makers, house makers and the like).

Under such circumstances, in a lithium secondary battery, a method of preparing an electrolytic solution is desired, which does not need special knowledge and high equipment or technique of the chemical field. The problem to be solved of the present invention is to provide a method that makes it possible to prepare a desired non-aqueous electrolytic solution in a short time, simply and yet in any ratio even by a non-specialist in preparation of a non-aqueous electrolytic solution, and a material therefor.

### MEANS FOR SOLVING PROBLEM

As a result of an extensive investigation, the inventors have an idea that by providing a non-aqueous electrolytic solution kit having plural non-aqueous electrolytic solutions having different compositions, whereby to suitably weigh (by volume or mass of the non-aqueous electrolytic solutions) and mix non-aqueous electrolytic solutions prepared in certain compositions contained in the non-aqueous electrolytic solution kit, it is possible to prepare a desired non-aqueous electrolytic solution in a short time, simply and yet in any ratio even by a non-specialist in preparation of a non-aqueous electrolytic solution, and completed the invention.

That is, the present invention provides (1) and (2) described below.
(1) A non-aqueous electrolytic solution kit having plural non-aqueous electrolytic solutions having different compositions and vessels, the non-aqueous electrolytic solution kit containing:
   a base non-aqueous electrolytic solution in which an electrolyte salt is dissolved in at least a non-aqueous solvent selected from cyclic carbonate, chain ester, and a mixture of cyclic carbonate and chain ester; and
   a non-aqueous electrolytic solution for adjustment having a different composition from the composition of the base non-aqueous electrolytic solution,
   in which at least one of the vessels is constituted so as to be capable of weighing the inner capacity.
(2) A method of preparing a non-aqueous electrolytic solution using the non-aqueous electrolytic solution kit according to (1) above, the method including:
   mixing the base non-aqueous electrolytic solution and the non-aqueous electrolytic solution for adjustment.

In the present specification, "preparation" means manufacture, and "adjustment" means manipulation for regulation in accordance with standards.

### EFFECT OF THE INVENTION

According to the invention, it is possible to prepare a desired non-aqueous electrolytic solution simply and yet in any ratio in a short time with extremely small weighing error, only by suitably weighing (by volume or mass of the non-aqueous electrolytic solutions) and mixing prepared non-aqueous electrolytic solutions in a certain composition contained in the non-aqueous electrolytic solution kit of the present invention by using at least one vessel being capable of weighing the inner capacity among vessels which are one of the constitutions of the present invention, even by a non-specialist in preparation of a non-aqueous electrolytic solution. In addition, by using the non-aqueous electrolytic solution kit of the present invention, it is possible to notably suppress the temperature change at the time of the preparation, thereby suppress deterioration or composition change of the non-aqueous electrolytic solution, and it is possible to use a solution of a non-aqueous solvent that is solid at ordinary temperature (for example, ethylene carbonate having 38°C of the melting point and the like) by mixing with another non-aqueous solvent. In addition, it is possible to suppress increase of the moisture and the acid content or coloring of the non-aqueous electrolytic solution after the preparation. Further, it is also possible to prepare a non-aqueous electrolytic solution containing an additive by combining with a non-aqueous electrolytic solution in which an electrolyte salt different from a main salt and/or organic additive are dissolved in a non-aqueous solvent.

In addition, with the method of preparing a non-aqueous electrolytic solution of the present invention, it is possible to change the solvent composition of the non-aqueous electrolytic solution at a fixed concentration of the electrolyte salt, or change only the concentration of the electrolyte salt, or further perform both of them in the same way with only simple manipulation.

### DESCRIPTION OF EMBODIMENTS

The non-aqueous electrolytic solution kit of the present invention is a non-aqueous electrolytic solution kit containing plural non-aqueous electrolytic solutions having different compositions, and vessels, wherein the non-aqueous electrolytic solution kit contains a base non-aqueous electrolytic solution in which an electrolyte salt is dissolved in at least a non-aqueous solvent selected from cyclic carbonate, chain ester, and a mixture of cyclic carbonate and chain ester, and a non-aqueous electrolytic solution for adjustment having a different composition from the composition of the base non-aqueous electrolytic solution, and at least one of the vessels is a vessel being capable of weighing the inner capacity.

In addition, in the present invention, as the non-aqueous electrolytic solution for adjustment, a non-aqueous electrolytic solution in which further at least one or more additives are dissolved can be used.

First, each component constituting the non-aqueous electrolytic solution kit of the present invention will be explained.

### [Non-aqueous solvent]

As the non-aqueous solvent used in the non-aqueous electrolytic solution kit of the present invention, cyclic carbonate, chain ester, or a mixture thereof can be used alone in one kind or as a mixture of two or more.

Meanwhile, the term "chain ester" is a concept encompassing chain carbonate and chain carboxylic acid ester.

### [Cyclic carbonate]

Suitable examples of the cyclic carbonate include ethylene carbonate (EC), propylene carbonate (PC), 1,2-butylene carbonate, 2,3-butylene carbonate, 4-fluoro-1,3-dioxolane-2-one (FEC), trans or cis-4,5-difluoro-1,3-dioxolane-2-one (hereafter, referred to as "DFEC" as a generic name for the two), vinylene carbonate (VC), vinyl ethylene carbonate (VEC) and the like.

Among them, a cyclic carbonate selected from EC, PC, a cyclic carbonate having a fluorine atom and a cyclic carbonate having a carbon-carbon double bond is preferable. As the cyclic carbonate having a fluorine atom, FEC or DFEC is preferable. As the cyclic carbonate having a carbon-carbon double bond, VC or VEC is preferable. In addition, in a case where a cyclic carbonate is used alone in one kind as the non-aqueous solvent constituting the non-aqueous electrolytic solution kit of the present invention, PC is desirably used from the viewpoint of melting point and solubility of the electrolyte salt.

### [Chain ester]

Examples of the chain ester include asymmetric chain carbonates such as methylethyl carbonate (MEC), methylpropyl carbonate, methylisopropyl carbonate, methylbutyl carbonate and ethylpropyl carbonate, symmetric chain carbonates such as dimethyl carbonate (DMC), diethyl carbonate (DEC), dipropyl carbonate and dibutyl carbonate, and chain carboxylic acid esters such as methyl acetate, ethyl acetate, methyl propionate, ethyl propionate, methyl pivalate, butyl pivalate, hexyl pivalate, octyl pivalate, dimethyl oxalate, ethylmethyl oxalate and diethyl oxalate.

Among them, DMC or DEC is preferable as the symmetric chain carbonate, and, as the asymmetric chain carbonate, one having a methyl group is preferable, MEC is more preferable.

### [Mixture of cyclic carbonate and chain ester]

As the mixture of cyclic carbonate and chain ester, the cyclic carbonate described above, or the chain ester described above can be used alone in one kind or as a mixture of two or more. Examples of the suitable combination thereof include combinations of DMC and EC, MEC and EC, DEC and EC, DMC and FEC, MEC and FEC, or DEC and FEC, and the like. The mixing ratio of these cyclic carbonate and chain ester is not particularly limited, but is preferably 50 : 50 in the volume ratio from the point of easy preparation of the desired non-aqueous electrolytic solution, and thereby easy handling of the non-aqueous electrolytic solution kit. Meanwhile, the mixing ratio may be prescribed in the mass ratio of cyclic carbonate and chain ester. In this case, the mixing ratio is not particularly limited either, but is preferably 50 : 50 in the mass ratio similarly from the point of easy handling of the non-aqueous electrolytic solution kit.

### [Electrolyte salt]

Suitable examples of the electrolyte salt used in the present invention include the lithium salts described below.

That is, suitable examples of the electrolyte salt include inorganic lithium salts such as LiPF₆, LiPO₂F₂, Li₂PO₃F, LiBF₄ and LiClO₄, lithium salts containing a chained fluoroalkyl group such as LiN(SO₂CF₃)₂, LiN(SO₂C₂F₅)₂, LiCF₃SO₃, LiC(SO₂CF₃)₃, LiPF₄(CF₃)₂, LiPF₃(C₂F₅)₃, LiPF₃(CF₃)₃, LiPF₃(iso-C₃F₇)₃, and LiPF₅(iso-C₃F₇), lithium salts having a cyclic fluoroalkylene chain such as (CF₂)₂(SO₂)₂NLi and (CF₂)₃(SO₂)₂NLi, and a lithium salt with an oxalate complex as anion such as lithium bis[oxalate-O,O']borate and lithium difluoro[oxalate-O,O']borate. Among them, at least one selected from LiPF₆, LiPO₂F₂, Li₂PO₃F, LiBF₄, LiN(SO₂CF₃) and LiN(SO₂C₂F₅)₂ is preferable, at least one selected from LiPF₆ and LiBF₄ is more preferable.

The lower limit of the concentration of the electrolyte salt in a case where the electrolyte salt is dissolved in a non-aqueous electrolytic solution, is preferably 0.3 M or more, more preferably 0.5 M or more, and further preferably 0.8 M or more. In addition, the upper limit thereof varies depending on the kind of the electrolyte salt and combination of the non-aqueous solvents, but the electrolyte salt can be used up to that the concentration of the electrolyte salt reaches saturation with respect to the non-aqueous solvent. The upper limit thereof is preferably 4 M or less, more preferably 3 M or less, and further preferably 2 M or less.

### [Additive]

In addition, an additive may be further added to the non-aqueous electrolytic solution for the purpose of improving the electrochemical property of the battery obtained using the non-aqueous electrolytic solution kit of the present invention. For such purpose, the non-aqueous electrolytic solution kit of the present invention may contain, as a non-aqueous electrolytic solution for adjustment, a non-aqueous electrolytic solution in which a conventionally known additive is dissolved in a non-aqueous solvent.

### [Non-aqueous electrolytic solution kit]

Next, the non-aqueous electrolytic solution kit of the present invention will be explained in detail.

As described above, the non-aqueous electrolytic solution kit of the present invention contains a base non-aqueous electrolytic solution and a non-aqueous electrolytic solution for adjustment. The base non-aqueous electrolytic solution in the present invention is a non-aqueous electrolytic solution in which an electrolyte salt is dissolved in a non-aqueous solvent selected from cyclic carbonate, chain ester, and a mixture of cyclic carbonate and chain ester. On the other hand, the non-aqueous electrolytic solution for adjustment is at least one kind of a non-aqueous electrolytic solution having a different composition from the composition of the base non-aqueous electrolytic solution.

The base non-aqueous electrolytic solution may contain any one of cyclic carbonate, chain ester, and a mixture of cyclic carbonate and chain ester as a non-aqueous solvent. However, the base non-aqueous electrolytic solution preferably contains propylene carbonate alone or contains a mixture of cyclic carbonate and chain ester as a non-aqueous solvent from the point of easy handling of the non-aqueous electrolytic solution kit. In addition, when the base non-aqueous electrolytic solution contains a mixture of cyclic carbonate and chain ester, one which contains one kind of cyclic carbonate and chain ester respectively is particularly preferable.

In addition, the base non-aqueous electrolytic solution also contains an electrolyte salt in addition to the non-aqueous solvent. Examples of the electrolyte salt include the lithium salts described above.

Suitable examples of specific aspects of the base non-aqueous electrolytic solution include, for example, an electrolytic solution of 1.0 M LiPF₆ EC/DMC = 50/50 (volume ratio), an electrolytic solution of 1.0 M LiPF₆ EC/MEC = 50/50 (volume ratio), an electrolytic solution of 1.0 M LiPF₆ EC/DEC = 50/50 (volume ratio), an electrolytic solution of 1.0 M LiPF₆ FEC/DMC = 50/50 (volume ratio), an electrolytic solution of 1.0 M LiPF₆ FEC/MEC = 50/50 (volume ratio), an electrolytic solution of 1.0 M LiPF₆ FEC/DEC = 50/50 (volume ratio), and an electrolytic solution of 1.0 M LiPF₆ PC, and the like.

Meanwhile, the non-aqueous electrolytic solution kit of the present invention may have at least one kind of the base non-aqueous electrolytic solution. However, the non-aqueous electrolytic solution kit of the present invention preferably has plural kinds of the base non-aqueous electrolytic solution from the viewpoint of dealing with broad compositions.

In addition, the non-aqueous electrolytic solution for adjustment is not particularly limited as long as it is at least one kind of non-aqueous electrolytic solution having a different composition from the composition of the base non-aqueous electrolytic solution described above. However, the non-aqueous electrolytic solution for adjustment preferably contains a non-aqueous solvent and an electrolyte salt. The non-aqueous solvent may be any non-aqueous solvent having a different composition from the composition of the base non-aqueous electrolytic solution described above. However, the same non-aqueous solvent as the non-aqueous solvent of the base non-aqueous electrolytic solution described above may be used in one kind, or a mixture of two or more. Particularly, the non-aqueous electrolytic solution for adjustment in the present invention is preferably those containing only one chain ester that is the same as the chain ester contained in the base non-aqueous electrolytic solution described above, and the same electrolyte salt that is dissolved in the same concentration of the electrolyte salt as the base non-aqueous electrolytic solution in this chain ester. In addition, in a case where the non-aqueous electrolytic solution kit of the present invention has plural kinds of the base non-aqueous electrolytic solution at this time, the non-aqueous electrolytic solution kit of the present invention preferably has non-aqueous electrolytic solutions for adjustment corresponding to each of the base non-aqueous electrolytic solution. Particularly, by using such non-aqueous electrolytic solution as the non-aqueous electrolytic solution for adjustment, it is possible to further simply prepare a non-aqueous electrolytic solution having a desired composition. For example, the non-aqueous electrolytic solution kit of the present invention has an electrolytic solution of 1.0 M LiPF₆ EC/DMC = 50/50 (volume ratio) as the base non-aqueous electrolytic solution, and an electrolytic solution of 1.0 M LiPF₆ DMC as the non-aqueous electrolytic solution for adjustment. By preparing a non-aqueous electrolytic solution using this non-aqueous electrolytic solution kit of the present invention, it is possible to arbitrarily adjust the ratio of EC and DMC in 1.0 M LiPF₆ EC/DMC electrolytic solution within a range of less than 50% of the EC volume ratio.

Suitable examples of specific aspects of the non-aqueous electrolytic solution for adjustment include, for example, an electrolytic solution of 1.0 M LiPF₆ DMC, an electrolytic solution of 1.0 M LiPF₆ MEC, and an electrolytic solution of 1.0 M LiPF₆ DEC, and the like.

### (Moisture of non-aqueous electrolytic solution)

The moisture content of the base non-aqueous electrolytic solution and the non-aqueous electrolytic solution for adjustment constituting the electrolytic solution kit of the present invention is suitably 50 ppm or less, preferably 30 ppm or less, more preferably 20 ppm or less, and particularly preferably 10 ppm or less.

Increase of the moisture content after storage for 24 hours from preparation of the electrolytic solution is 15 ppm or less, preferably 10 ppm or less, further preferably 7 ppm or less, and particularly preferably 5 ppm or less.

Meanwhile, the moisture of the non-aqueous electrolytic solution can be measured with a Karl Fischer moisture measuring device.

### (Acid content of non-aqueous electrolytic solution)

The acid content of the base non-aqueous electrolytic solution and the non-aqueous electrolytic solution for adjustment constituting the electrolytic solution kit of the present invention is preferably 20 ppm or less, more preferably 15 ppm or less, further preferably 10 ppm or less, and particularly preferably 5 ppm or less in terms of hydrogen fluoride (HF).

Increase of the acid content of the electrolytic solution after storage for 24 hours from the preparation is 10 ppm or less, preferably 7 ppm or less, further preferably 5 ppm or less, and particularly preferably 3 ppm or less.

Meanwhile, the acid content of the non-aqueous electrolytic solution is measured using, for example, an automatic titration equipment manufactured by HIRANUMA SANGYO Co., LTD. (productname: TS-980) with a 0.01N-NaOH aqueous solution as a titration solution and bromothymol blue (BTB) solution as an indicator. The measured value is converted to HF, and the converted value can be taken as the acid content.

### (Color number in Hazen units (APHA) of non-aqueous electrolytic solution)

APHA of the base non-aqueous electrolytic solution and the non-aqueous electrolytic solution for adjustment constituting the electrolytic solution kit of the present invention is preferably 100 or less, more preferably 50 or less, further preferably 30 or less, and most preferably less than 10.

Increase of the color number in Hazen units (APHA) after 24 hours from the preparation of the non-aqueous electrolytic solution is 30 or less, preferably 20 or less, further preferably 10 or less, and most preferably 5 or less.

Meanwhile, for measurement of APHA, the concentration of a standard solution, which is most approximate to the sample, was obtained and the number of the standard solution was taken as the APHA value based on JIS K-6901.

In addition, the volume of the base non-aqueous electrolytic solution and the non-aqueous electrolytic solution for adjustment constituting the electrolytic solution kit of the present invention is not particularly limited, but is preferably 10 to 200,000 mL, more preferably 20 to 30,000 mL, further preferably 50 to 1,000 mL, and particularly preferably 100 to 500 mL from the viewpoint of handling property. The shell diameter of the vessel is not particularly limited, but is preferably 50 to 150 mm, and more preferably 60 to 100 mm from the viewpoint of handling property. The volume of the electrolytic solution kit constituting the base non-aqueous electrolytic solution and the non-aqueous electrolytic solution for adjustment set to the range described above, can make easy use in the laboratory scale.

At least one of the vessels constituting the electrolytic solution kit of the present invention is the vessel described in (a) to (c) below, and is preferably a vessel being capable of weighing the inner capacity.
(a) Vessel storing the base non-aqueous electrolytic solution.
(b) Vessel storing the non-aqueous electrolytic solution for adjustment.
(c) Vessel for preparing the base non-aqueous electrolytic solution and the non-aqueous electrolytic solution for adjustment.

In the present invention, the expression "being capable of weighing the inner capacity" is not particularly limited as long as a vessel is capable of weighing the inner capacity. However, for example, the vessel being capable of weighing the inner capacity may be in a form such that the vessel is capable of weighing at least one of the volume and the mass of the non-aqueous electrolytic solution charged in the vessel.

For example, the vessel being capable of weighing the inner capacity is preferably a vessel that can visualize the inner capacity, and thereby can weigh the volume of the non-aqueous electrolytic solution with visual observation or the like. Such vessel that can visualize the inner capacity is preferably of a transparent or semi-transparent material for the whole or a portion of the vessel.

Suitable examples of the material for the vessel include resins selected from polyethylene, polypropylene, Teflon (registered trademark), PTFE and the like. Among them, the material for the vessel is preferably polypropylene, which is excellent in durability and practicality.

In addition, in the present invention, the vessel being capable of weighing the inner capacity is preferably marked with degrees in addition to visualization of the inner capacity, and thereby can make easier weighing the inner capacity with visual observation or the like. Meanwhile, at this time, the degrees marked on the vessel can be made as, for example, a degree indicating the volume corresponding to the inner capacity, or degrees indicating the mass corresponding to the inner capacity. Alternatively, plural kinds of degrees may be marked on one vessel. For example, degrees indicating the volume corresponding to the inner capacity, and degrees indicating the mass corresponding to the inner capacity may be marked on one vessel. Alternatively, the specific gravity may vary depending on the kind of the non-aqueous electrolytic solution, and in that case, plural degrees indicating the mass corresponding to the inner capacity may be marked depending on the kind of the non-aqueous electrolytic solution on one vessel.

Thus, as such, by visualizing the inner capacity, and marking degrees, it is possible to prepare a non-aqueous electrolytic solution having a desired composition without manipulation of exactly weighing the mass of the base non-aqueous electrolytic solution or the non-aqueous electrolytic solution for adjustment, but with simple adjustment by eye measurement using the degrees, and realize substantial shortening of the preparation time.

The degrees of the vessel are used by displaying, for example, roughness, coloring line or the like on the outer part or the inner part of the side surface of the vessel.

The degrees are degrees exactly equally dividing the volume, and are preferably equally divided by 5 to 10. Auxiliary degrees (also referred to as sub-degree) dividing one degree in a plural number is preferably further marked (for example, for a vessel having 100 mL of the volume, a vessel marked with 10 mL units of main degrees and 5 mL units of an auxiliary degree is suitably used.).

In addition, the volume of the vessel constituting the electrolytic solution kit of the present invention is preferably 10 to 200,000 mL, more preferably 20 to 30,000 mL, further preferably 50 to 1,000 mL, and particularly preferably 100 to 500 mL from the viewpoint of handling property. Particularly, with respect to the "(c) vessel for preparing the base non-aqueous electrolytic solution and the non-aqueous electrolytic solution for adjustment" among the vessels constituting the electrolytic solution kit of the present invention, the volume is preferably 5000 to 5 mL, more preferably 1000 to 10 mL, and further preferably 500 to 50 mL in order to make easy preparation of the electrolytic solutions in a laboratory scale.

Alternatively, the vessel being capable of weighing the inner capacity may have mass detection means such as a mass sensor, whereby to weigh the mass by the mass detection means. In addition, the vessel being capable of weighing the inner capacity may be constituted such that the inner part thereof can be split into 2 or more regions by partitions. The location or the number of the partition can be suitably changed depending on desired volume ratio or mass ratio. Using the regions split by the partitions, each non-aqueous electrolytic solution can be weighed, and then mixed by removing the partitions. Further, the vessel being capable of weighing the inner capacity may have plural input ports having different opening areas or plural input slits having different slit width, and can weigh each non-aqueous electrolytic solution using these input ports or input slits depending on a desired volume ratio or mass ratio.

Adjustment of the non-aqueous electrolytic solution by mixing the base non-aqueous electrolytic solution and the non-aqueous electrolytic solution for adjustment may be performed at a speed of 1,000 mL per second, but preferably performed at a speed of 500 mL per second, and further preferably performed at a speed of 100 mL per second. When the mixing is performed at the speed or lower, there is no temperature increase of the non-aqueous electrolytic solution, and no fear of decomposition of the components or evaporation of chain ester by the temperature increase, and it is preferable.

Furthermore, the non-aqueous electrolytic solution kit of the present invention may have an additive-containing non-aqueous electrolytic solution, which is obtained by dissolving an additive, and an electrolyte salt used as necessary in a non-aqueous solvent. Examples of an aspect of the additive-containing non-aqueous electrolytic solution include an electrolytic solution of 1.0 M LiPF₆ DMC containing 5.0 mass% VC, an electrolytic solution of 1.0 M LiPF₆ MEC containing 5.0 mass% VC, an electrolytic solution of 1.0 M LiPF₆ DEC containing 5.0 mass% VC, an electrolytic solution of 1.0 M LiPF₆ DEC containing 5.0 mass% PS, an electrolytic solution of 1.0 M LiPF₆ MEC containing 5.0 mass% PS, an electrolytic solution of 1.0 M LiPF₆ DEC containing 5.0 mass% PS and the like.

Meanwhile, examples of specific aspects of the non-aqueous electrolytic solution kit of the present invention include an aspect consisting of a basic 7 point kit, an aspect having at least one option kit selected from a FEC option kit, an additive VC option kit, and an additive PS option kit in addition to the basic 7 point kit, and the like as described below.

### [Basic 7 point kit]

Electrolytic solution of 1.0 M LiPF₆ EC/DMC = 50/50 (volume ratio)

Electrolytic solution of 1.0 M LiPF₆ EC/MEC = 50/50 (volume ratio)

Electrolytic solution of 1.0 M LiPF₆ EC/DEC = 50/50 (volume ratio)

Electrolytic solution of 1.0 M LiPF₆ PC

Electrolytic solution of 1.0 M LiPF₆ DMC

Electrolytic solution of 1.0 M LiPF₆ MEC

Electrolytic solution of 1.0 M LiPF₆ DEC
[FEC option kit] A FEC option kit is an option kit to the basic 7 point kit.

Electrolytic solution of 1.0 M LiPF₆ FEC/DMC = 50/50 (volume ratio)

Electrolytic solution of 1.0 M LiPF₆ FEC/MEC = 50/50 (volume ratio)

Electrolytic solution of 1.0 M LiPF₆ FEC/DEC = 50/50 (volume ratio)
[Additive VC option kit] An additive VC option kit is an option kit to the basic 7 point kit.

Electrolytic solution of 1.0 M LiPF₆ DMC containing 5.0 mass% VC

Electrolytic solution of 1.0 M LiPF₆ MEC containing 5.0 mass% VC

Electrolytic solution of 1.0 M LiPF₆ DEC containing 5.0 mass% VC
[Salt concentration preparation option kit] A salt concentration preparation option kit is an option kit to the basic 7 point kit.

Electrolytic solution of 2.0 M LiPF₆ EC/DMC = 50/50 (volume ratio)

Electrolytic solution of 2.0 M LiPF₆ EC/MEC = 50/50 (volume ratio)

Electrolytic solution of 2.0 M LiPF₆ EC/DEC = 50/50 (volume ratio)

Electrolytic solution of 2.0 M LiPF₆ PC

Electrolytic solution of 2.0 M LiPF₆ DMC

Electrolytic solution of 2.0 M LiPF₆ MEC

Electrolytic solution of 2.0 M LiPF₆ DEC

Meanwhile, in the basic 7 point kit, the electrolytic solution of 1.0 M LiPF₆ EC/DMC = 50/50 (volume ratio), the electrolytic solution of 1.0 M LiPF₆ EC/MEC = 50/50 (volume ratio), the electrolytic solution of 1.0 M LiPF₆ EC/DEC = 50/50 (volume ratio), and the electrolytic solution of 1.0 M LiPF₆ PC constitute the base non-aqueous electrolytic solution, and the electrolytic solution of 1.0 M LiPF₆ DMC, the electrolytic solution of 1.0 M LiPF₆ MEC, and the electrolytic solution of 1.0 M LiPF₆ DEC constitute the non-aqueous electrolytic solution for adjustment.

Meanwhile, a non-aqueous electrolytic solution prepared by the non-aqueous electrolytic solution kit of the present invention can be further used as the base non-aqueous electrolytic solution or as the non-aqueous electrolytic solution for adjustment so as to be used in preparing an electrolytic solution having a further complicated composition.

### [Method of preparing non-aqueous electrolytic solution using non-aqueous electrolytic solution kit]

In the case of preparing a non-aqueous electrolytic solution consisting of solvents excluding EC using the non-aqueous electrolytic solution kit of the present invention, the non-aqueous electrolytic solution can be prepared by mixing the non-aqueous electrolytic solutions not containing EC in a desired volume ratio in the basic 7 point kit. In the case of preparing a non-aqueous electrolytic solution consisting of solvents containing EC, the non-aqueous electrolytic solution can be prepared by preparing a non-aqueous electrolytic solution containing EC and a non-aqueous electrolytic solution not containing EC, and then mixing the non-aqueous electrolytic solutions in a volume ratio so as to give the intended composition.

In addition, in the case of preparing a FEC-containing non-aqueous electrolytic solution, the non-aqueous electrolytic solution can be prepared by preparing a FEC-containing non-aqueous electrolytic solution selected from the FEC option kits and a non-aqueous electrolytic solution contained in the basic 7 point kit, and then mixing the non-aqueous electrolytic solutions in a volume ratio so as to give the intended composition.

Furthermore, in the case of preparing a non-aqueous electrolytic solution containing an additive, the non-aqueous electrolytic solution can be prepared by preparing an additive-containing non-aqueous electrolytic solution selected from the additive VC option kit and the additive PS option kit, and a non-aqueous electrolytic solution contained in the basic 7 point kit, and then mixing the non-aqueous electrolytic solutions in a volume ratio so as to give the intended composition.

In any one of the cases, a method of preparing a desired non-aqueous electrolytic solution is very simple in manipulation by only mixing the electrolytic solutions contained in the non-aqueous electrolytic solution kit using a vessel being capable of weighing the inner capacity. In addition, a simple equipment such as a nitrogen glove box or a vacuum line and a Schlenk flask may be used in the preparation, although it needs a non-aqueous environment in the weighing and the mixing. In addition, an electrolyte salt is already dissolved in each non-aqueous electrolytic solution constituting the non-aqueous electrolytic solution kit, and there is no generation of heat when the non-aqueous electrolytic solutions contained in the non-aqueous electrolytic solution kit are mixed with each other. Further, EC, which is solid at ordinary temperature, is also already made as a solution, and thus handling is very simple.

### [Use of non-aqueous electrolytic solution kit]

A non-aqueous electrolytic solution to be prepared using the non-aqueous electrolytic solution kit of the present invention can be used as a non-aqueous electrolytic solution for an energy storage device such as a lithium battery (a lithium primary battery and a lithium secondary battery), an electric double layer capacitor (energy storage device storing energy using an electric double layer capacity of an electrolytic solution and an electrode interface), an energy storage device storing energy using dope/de-dope reaction of an electrode, and a lithium ion capacitor (an energy storage device storing energy using lithium ion intercalation into a carbon material such as graphite that is a negative electrode). Among them, the non-aqueous electrolytic solution to be prepared using the non-aqueous electrolytic solution kit of the present invention is preferably used for a first energy storage device (i.e., for a lithium battery), and most suitably used for a lithium secondary battery.

Meanwhile, in the above, as a preferable aspect of the base non-aqueous electrolytic solution, a non-aqueous electrolytic solution containing propylene carbonate alone, or a non-aqueous electrolytic solution containing a mixture of cyclic carbonate and chain ester as a non-aqueous solvent has been exemplified, and, as a preferable aspect of the non-aqueous electrolytic solution for adjustment, a non-aqueous electrolytic solution containing only one kind of chain ester, which is the same as the chain ester contained in the base non-aqueous electrolytic solution has been exemplified, respectively. However, the base non-aqueous electrolytic solution and the non-aqueous electrolytic solution for adjustment are not particularly limited to such aspects. Furthermore, the electrolytic solution exemplified as the base non-aqueous electrolytic solution may be used as the non-aqueous electrolytic solution for adjustment, or the electrolytic solution exemplified as the non-aqueous electrolytic solution for adjustment may be used as the base non-aqueous electrolytic solution.

### [Examples]

Hereinafter, Examples of the present invention will be illustrated. However, the present invention is not limited to these Examples. In addition, for convenience, 100 mL of a non-aqueous electrolytic solution having an intended composition was prepared as an example in all Examples. However, the amount may be increased or decreased depending on a desired amount of the non-aqueous electrolytic solution having an intended composition.

In the basic 7 point kits used in this experiment, 100 mL scale was used, and the moisture of the non-aqueous electrolytic solution of the basic 7 point kit was 5 ppm, and the acid content was 9 ppm, and APHA was less than 10 for all.

### [I: Case of changing composition]

### (Example 1)

Preparation of electrolytic solution of 1.0 M LiPF₆ EC/MEC = 30/70 (volume ratio)

In a nitrogen box, into a semi-transparent vessel for preparation marked with 10-equally divided degrees (one degree is 10 mL) and sub-degrees between respective degrees (sub-degree is 5 mL), 6 degrees (60 mL) of the B-1 solution and 4 degrees (40 mL) of the F-1 solution among the non-aqueous electrolytic solutions included in the basic 7 point kit described below were poured, and the vessel was lightly shaken, whereby to prepare an 100 mL electrolytic solution of 1.0 M LiPF₆ EC/MEC = 30/70 (volume ratio). The time necessary for the preparation was 10 minutes, and temperature change in the electrolytic solution before and after the preparation was not observed. In addition, the moisture, the acid content, and APHA of the non-aqueous electrolytic solution after storage for 24 hours from the preparation are shown in Table 1.

### [Basic 7 point kit]

A-1 solution: Electrolytic solution of 1.0 M LiPF₆ EC/DMC = 50/50 (volume ratio)
B-1 solution: Electrolytic solution of 1.0 M LiPF₆ EC/MEC = 50/50 (volume ratio)
C-1 solution: Electrolytic solution of 1.0 M LiPF₆ EC/DEC = 50/50 (volume ratio)
D-1 solution: Electrolytic solution of 1.0 M LiPF₆ PC
E-1 solution: Electrolytic solution of 1.0 M LiPF₆ DMC
F-1 solution: Electrolytic solution of 1.0 M LiPF₆ MEC
G-1 solution: Electrolytic solution of 1.0 M LiPF₆ DEC

### [II: Case of adding solvent species (chain ester)]

### (Example 2)

Preparation of electrolytic solution of 1.0 M LiPF₆ EC/DMC/MEC = 30/35/35 (volume ratio)

In a nitrogen box, into a semi-transparent vessel for preparation marked with 10-equally divided degrees (one degree is 10 mL) and sub-degrees between respective degrees (sub-degree is 5 mL), 3 degrees (30 mL) of the A-1 solution, 3 degrees (30 mL) of the B-1 solution, 2 degrees (20 mL) of the E-1 solution, and 2 degrees (20 mL) of the F-1 solution among the non-aqueous electrolytic solutions included in the basic 7 point kit described above were poured, and the vessel was lightly shaken, whereby to prepare an 100 mL electrolytic solution of 1.0 M LiPF₆ EC/DMC/MEC = 30/35/35 (volume ratio). The time necessary for the preparation was 20 minutes, and temperature change in the electrolytic solution before and after the preparation was not observed. In addition, the moisture, the acid content, and APHA of the non-aqueous electrolytic solution after storage for 24 hours from the preparation are shown in Table 1.

### [III: Case of adding solvent species (cyclic carbonate)]

### (Example 3)

Preparation of electrolytic solution of 1.0 M LiPF₆ EC/PC/MEC = 15/15/70 (volume ratio)

In a nitrogen box, into a semi-transparent vessel for preparation marked with 10-equally divided degrees (one degree is 10 mL) and sub-degrees between respective degrees (sub-degree is 5 mL), 3 degrees (30 mL) of the B-1 solution, 1 degree and 1 sub-degree (15 mL) of the D-1 solution, and 5 degrees and 1 sub-degree (55 mL) of the F-1 solution among the non-aqueous electrolytic solutions included in the basic 7 point kit described above were poured, and the vessel was lightly shaken, whereby to prepare an 100 mL electrolytic solution of 1.0 M LiPF₆ EC/PC/MEC = 15/15/70 (volume ratio). The time necessary for the preparation 15 minutes, and temperature change in the electrolytic solution before and after the preparation was not observed. In addition, the moisture, the acid content, and APHA of the non-aqueous electrolytic solution after storage for 24 hours from the preparation are shown in Table 1.

### [IV: Case of changing salt concentration]

### (Example 4)

Preparation of electrolytic solution of 1.5 M LiPF₆ EC/MEC = 30/70 (volume ratio)

In a nitrogen box, into a semi-transparent vessel for preparation marked with 10-equally divided degrees (one degree is 10 mL) and sub-degrees between respective degrees (sub-degree is 5 mL), 3 degrees (30 mL) of the B-1 solution, 3 degrees (30 mL) of the B-2 solution, 2 degrees (20 mL) of the F-1 solution and 2 degrees (20 mL) of the F-2 solution among the non-aqueous electrolytic solutions included in the basic 7 point kit described above and in kit for adjusting salt concentration described below were poured, and the vessel was lightly shaken, whereby to prepare an 100 mL electrolytic solution of 1.5 M LiPF₆ EC/MEC = 30/70 (volume ratio). The time necessary for the preparation 20 minutes, and temperature change in the electrolytic solution before and after the preparation was not observed. Meanwhile, the moisture of the non-aqueous electrolytic solution was 5 ppm, the acid content was 10 ppm, and APHA before the preparation was less than 10. The moisture, the acid content, and APHA of the non-aqueous electrolytic solution after storage for 24 hours from the preparation are shown in Table 1.
[Salt concentration adjustment option kit] A salt concentration adjustment option kit is an option kit to the basic 7 point kit.
A-2 solution: Electrolytic solution of 2.0 M LiPF₆ EC/DMC = 50/50 (volume ratio)
B-2 solution: Electrolytic solution of 2.0 M LiPF₆ EC/MEC = 50/50 (volume ratio)
C-2 solution: Electrolytic solution of 2.0 M LiPF₆ EC/DEC = 50/50 (volume ratio)
D-2 solution: Electrolytic solution of 2.0 M LiPF₆ PC
E-2 solution: Electrolytic solution of 2.0 M LiPF₆ DMC
F-2 solution: Electrolytic solution of 2.0 M LiPF₆ MEC
G-2 solution: Electrolytic solution of 2.0 M LiPF₆ DEC

### [Examples 5 to 13]

In order to prepare the specific electrolytic solution shown in Table 1 using the non-aqueous electrolytic solutions included in the basic 7 point kit described above, respective solutions were mixed using the vessel for preparation similar to those of Examples 1 to 3 in a nitrogen box, whereby to prepare a non-aqueous electrolytic solution having the composition shown in Table 1. The time necessary for the preparation was 10 minutes in a case where two solutions were used (Examples 5 and 7) similarly to Example 1; 15 minutes in a case where 3 solutions were used (Examples 6 and 8 to 10); and 20 minutes in a case where 4 solutions were used (Examples 11 to 13). In addition, temperature change in the electrolytic solution before and after the preparation was not observed in any example. Further, the moisture, the acid content, and APHA of the non-aqueous electrolytic solution after storage for 24 hours from the preparation are shown in Table 1.

[Table 1]

**Table 1**

| Example | Composition of non-aqueous electrolytic solution (volume ratio) | Preparation amount of non-aqueous electrolytic solution kit (mL) | | | | | | | | | Preparation time (minute) | Temperature change in mixing (°C) | Composition change | Moisture after preparation (ppm) | Acid content after preparation (ppm) | APHA after preparation |
|---|---|---|---|---|---|---|---|---|---|---|---|---|---|---|---|---|
| | | A-1 solution | B-1 solution | B-2 solution | C-1 solution | D-1 solution | E-1 solution | F-1 solution | F-2 solution | G-1 solution | | | | | | |
| Example 1 | 1.0 M LiPF₆ EC/MEC = 30/70 | | 60 | | | | | 40 | | | 10 | None | None | 6 | 10 | <10 |
| Example 2 | 1.0 M LPF, EC/DMC/MEC = 30/35/35 | 30 | 30 | | | | 20 | 20 | | | 20 | None | None | 6 | 12 | <10 |
| Example 3 | 1.0 M LiPF₆ EC/PC/MEC = 15/15/70 | | 30 | | | 15 | | 55 | | | 15 | None | None | 7 | 11 | <10 |
| Example 4 | 1.5 M LiPF₆ EC/MEC = 30/70 | | 30 | 30 | | | | 20 | 20 | | 20 | None | None | 7 | 13 | <10 |
| Example 5 | 1.0 M LiPF₆ PC/MEC = 30/70 | | | | | 30 | | 70 | | | 10 | None | None | 6 | 11 | <10 |
| Example 6 | 1.0 M LiPF₆ EC/MEC/DEC = 30/50/20 | | 60 | | | | | 20 | | 20 | 15 | None | None | 7 | 11 | <10 |
| Example 7 | 1.0 M LiPF₆ EC/DMC/MEC = 20/20/60 | 40 | | | | | | 60 | | | 10 | None | None | 7 | 13 | <10 |
| Example 8 | 1.0 M LiPF₆ EC/DMC/MEC = 20/20/60 | | 40 | | | | 20 | 40 | | | 15 | None | None | 7 | 13 | <10 |
| Example 9 | 1.0 M LiPF₆ EC/MEC/DEC = 30/50/20 | | 60 | | | | | 20 | | 20 | 15 | None | None | 7 | 11 | <10 |
| Example 10 | 1.0 M LiPF₆ EC/MEC/DEC = 30/50/20 | | 20 | | 40 | | | 40 | | | 15 | None | None | 7 | 11 | <10 |
| Example 11 | 1.0 M LiFP₆ EC/PC/MEC/DEC = 10/20/50/20 | | 20 | | | 20 | | 40 | | 20 | 20 | None | None | 6 | 12 | <10 |
| Example 12 | 1.0 M LiPF₆ EC/PC/MEC/DEC = 10/20/50/20 | | | | 20 | 20 | | 50 | | 10 | 20 | None | None | 6 | 12 | <10 |
| Example 13 | 1.0 M LiPF₆ EC/PC/DMC/MEC/DEC = 20/10/20/40/10 | 40 | | | | 10 | | 40 | | 10 | 20 | None | None | 7 | 13 | <10 |
| Comparative Example 1 | 1.0 M LiPF₆ EC/MEC = 30/70 | MEC 58.1 g + EC 31.4 g + LiPF₆ 125 g | | | | | | | | | 60 | 10 | Yes | 7 | 17 | 10 |
| Comparative Example 2 | 1.0 M LiPF₆ EC/MEC = 30/70 | EC/MEC (50/50 volume ratio) 57.7 mL + MEC 38.5 mL + LiPF₆ 15.2 g | | | | | | | | | 80 | 10 | Yes | 7 | 17 | <10 |
| Comparative Example 3 | 1.0 M LiPF₆ EC/MEC = 30/70 | 2.0 M LiPF₆ EC/MEC = 30/70 (volume ratio) 54.5 g + EC/MEC = 30/70 (volume ratio) 45.5 g | | | | | | | | | 40 | None | None | 6 | 17 | <10 |

### [Example 14]

Preparation of electrolytic solution of 1.0 M LiPF₆ FEC/EC/MEC = 10/20/70 (volume ratio)

B-1 solution: 40 mL, F-1 solution: 40 mL, and I solution: 20 mL among the non-aqueous electrolytic solutions included in the basic 7 point kit used in Example 1 and in the FEC option kit described below were mixed respectively in a nitrogen box using the vessel for preparation similar to those of Examples I to III, whereby to prepare an 100 mL electrolytic solution of 1.0 M LiPF₆ FEC/EC/MEC = 10/20/70 (volume ratio). The time necessary for the preparation was 15 minutes, and temperature change in the electrolytic solution before and after the preparation was not observed. In addition, the moisture, the acid content, and APHA of the non-aqueous electrolytic solution after storage for 24 hours from the preparation are shown in Table 2.

### [FEC option kit]

H solution: Electrolytic solution of 1.0 M LiPF₆ FEC/DMC = 50/50 (volume ratio)
I solution: Electrolytic solution of 1.0 M LiPF₆ FEC/MEC = 50/50 (volume ratio)
J solution: Electrolytic solution of 1.0 M LiPF₆ FEC/DEC = 50/50 (volume ratio)

### [Examples 15 to 17]

The specific electrolytic solutions shown in Table 2 were used among the non-aqueous electrolytic solutions included in the basic 7 point kit and in the FEC option kit described above, and respective electrolytic solutions were mixed in a nitrogen box using the vessel for preparation similar to those of Examples 1 to 3, whereby to prepare a non-aqueous electrolytic solution shown in Table 2 having the composition. The time necessary for the preparation was 15 minutes in a case where 3 solutions were used (Example 17), and 20 minutes in a case where 4 solutions were used (Examples 15 and 16). In addition, temperature change in the electrolytic solution before and after the preparation was not observed in any example. In addition, the moisture, the acid content, and APHA of the non-aqueous electrolytic solution after storage for 24 hours from the preparation are shown in Table 2.

[Table 2]

**Table 2**

| Example | Composition of non-aqueous electrolytic solution (volume ratio) | Preparation amount (mL) of electrolytic solution kit (basic 7 point set) | | | | | Preparation amount (mL) of FEC kit | | | Preparation time (minute) | Temperature change in mixing (°C) | Composition change | Moisture after preparation (ppm) | Acid content after preparation (ppm) | APHA after preparation |
|---|---|---|---|---|---|---|---|---|---|---|---|---|---|---|---|
| | | B-1 solution | D-1 solution | E-2 solution | F-1 solution | G-1 solution | H solution | I solution | J solution | | | | | | |
| Example 14 | 1.0 M LiPF₆ FEC/EC/MEC = 10/20/70 | 40 | | | 40 | | | 20 | | 15 | None | None | 7 | 15 | <10 |
| Example 15 | 1.0 M LiPF₆ PC/FEC/DMC/MEC = 5/5/20/60 | | 15 | 15 | 60 | | 10 | | | 20 | None | None | 7 | 14 | <10 |
| Example 16 | 1.0 M LiPF₆ EC/PC/FEC/MEC = 15/10/5/70 | 30 | 10 | | 50 | | | 10 | | 20 | None | None | 7 | 14 | <10 |
| Example 17 | 1.0 M LiPF₆ PC/FEC/DEC = 20/10/70 | | 20 | | | 60 | | | 20 | 15 | None | None | 6 | 14 | <10 |

### [Example 18]

Preparation of electrolytic solution of 1.0 mass% VC-containing 1.0 M LiPF₆ EC/MEC = 30/70 (volume ratio)

B-1 solution: 60 mL, F-1 solution: 20 mL and L solution: 20 mL among the non-aqueous electrolytic solutions included in the basic 7 point kit used in Example 1 and in the additive VC option kit described below were mixed respectively in a nitrogen box, whereby to prepare an 100 mL electrolytic solution of 1.0 mass% VC-containing 1.0 M LiPF₆ EC/MEC = 30/70 (volume ratio). The time necessary for the preparation was 15 minutes, and temperature change in the electrolytic solution before and after the preparation was not observed. In addition, the moisture of the non-aqueous electrolytic solution after the preparation was 5 ppm, the acid content was 11 ppm, and APHA was less than 10.

### [Additive VC option kit]

K solution: Electrolytic solution of 1.0 M LiPF₆ DMC containing 5.0 mass% VC
L solution: Electrolytic solution of 1.0 M LiPF₆ MEC containing 5.0 mass% VC
M solution: Electrolytic solution of 1.0 M LiPF₆ DEC containing 5.0 mass% VC

### [Comparative Example 1]

Preparation of electrolytic solution (1) of 1.0 M LiPF₆ EC/MEC = 30/70 (volume ratio)

In a nitrogen box, 56.1 g MEC was metered, and 31.4 g EC liquefied by heating to 50°C (melting point 38°C) was added, and subsequently 12.5 g LiPF₆ was metered and added by a small amount each, and dissolved with stirring, whereby to prepare an electrolytic solution of 1.0 M LiPF₆ EC/MEC = 30/70 (volume ratio). At this time, the temperature of the electrolytic solution increased by 10 °C. The volume of the obtained solution was 100 mL, and the time necessary for the preparation was 1 hour. In addition, the moisture, the acid content, and APHA of the non-aqueous electrolytic solution after storage for 24 hours from the preparation are shown in Table 1.

### [Comparative Example 2]

Preparation of electrolytic solution of 1.0 M LiPF₆ EC/MEC = 30/70 (volume ratio) (2)

In a nitrogen box, a mixed solvent of EC and MEC (volume ratio: 50/50) and MEC were weighed by 57.7 mL and 38.5 mL, respectively with a measuring cylinder, and put into a vessel not marked with degrees, and the vessel was lightly shaken, whereby to prepare a mixed solvent of EC/MEC = 30/70. Subsequently, 15.2 g LiPF₆ was metered and added by a small amount each and dissolved with stirring, whereby to prepare an electrolytic solution of 1.0 M LiPF₆ EC/MEC = 30/70 (volume ratio). At this time, the temperature of the electrolytic solution increased by 10°C. The volume of the obtained solution was 99.2 mL, and the error occurred in about 0.8% (loss of about 0.8 mL MEC), and an electrolytic solution having a composition of about 1.2% excess EC than the desired composition of the electrolytic solution was obtained. The time necessary for the preparation was 1 hour. In addition, the moisture, the acid content, and APHA of the non-aqueous electrolytic solution after storage for 24 hours from the preparation are shown in Table 1.

### [Comparative Example 3]

Preparation of electrolytic solution of 1.0 M LiPF₆ EC/MEC = 30/70 (volume ratio)

In a nitrogen box, 54.5 g electrolytic solution of 2.0 M LiPF₆ EC/MEC = 30/70 (volume ratio) was metered into a vessel not marked with degrees, and subsequently 45.5 g EC/MEC = 30/70 (volume ratio) was metered and added to the vessel. The vessel was lightly shaken, whereby to prepare an electrolytic solution of 1.0 M LiPF₆ EC/MEC = 30/70 (volume ratio). The volume of the obtained solution was 100 mL. Temperature change in the electrolytic solution before and after the preparation was not observed.

However, in this preparation method, it is not possible to change only the solvent composition without change of the salt concentration of the electrolyte, although it is possible to adjust only concentration of the electrolyte salt. So, it is difficult to simply prepare the non-aqueous electrolytic solution. In addition, the moisture, the acid content, and APHA of the non-aqueous electrolytic solution after storage for 24 hours from the preparation are shown in Table 1.

### [Evaluation]

As is evident from Comparative Examples 1 to 3, it could be understood that a conventional method of preparing a non-aqueous electrolytic solution by mixing a non-aqueous solvent and an electrolyte salt constituting the non-aqueous electrolytic solution has problems that the specific gravity of the non-aqueous solvent used varies; that the volume of the non-aqueous electrolytic solution increases with addition of the electrolyte salt compared to a case where only the non-aqueous solvent is used, and in consideration of this, calculation of the necessary weight by the specific gravity is necessary at all such times; and further that heat is generated when the electrolyte salt is dissolved, and thereby it further takes time; and in addition, in a case where a non-aqueous solvent having a high melting point such as EC is used, that measurement and addition need to be implemented with heating the non-aqueous solvent to above the melting point, and accordingly, the handling becomes complicated by further increase of the solution temperature, and the like. In addition, if the temperature increase of the non-aqueous electrolytic solution increases in the preparation, it causes evaporation of a non-aqueous solvent having high steam pressure, and is highly likely to cause a finally obtained composition to deviate from a desired composition.

In contrast, using the non-aqueous electrolytic solution kit of the invention, it is possible to prevent generation of such defects, and prepare a desired non-aqueous electrolytic solution simply and yet in a short time.

Meanwhile, in the present Examples, non-aqueous electrolytic solutions containing the same kind of the electrolyte salt are used as each non-aqueous electrolytic solution constituting the non-aqueous electrolytic solution kit. However, it goes without saying that non-aqueous electrolytic solutions containing different kinds of electrolyte salts or having different concentrations of the electrolyte salts may be used as each non-aqueous electrolytic solution constituting the non-aqueous electrolytic solution kit.

### INDUSTRIAL APPLICABILITY

The non-aqueous electrolytic solution kit of the invention makes it possible to prepare a non-aqueous electrolytic solution simply and yet in a short time, which is used in an energy storage device such as a lithium secondary battery. Thus, the non-aqueous electrolytic solution kit of the invention is extremely useful for use in research and development aimed for improving performances of an energy storage device such as a lithium secondary battery.

## Claims

1. A non-aqueous electrolytic solution kit having plural non-aqueous electrolytic solutions having different compositions, and vessels comprising:
a base non-aqueous electrolytic solution in which an electrolyte salt is dissolved in at least a non-aqueous solvent selected from cyclic carbonate, chain ester, and a mixture of cyclic carbonate and chain ester; and
a non-aqueous electrolytic solution for adjustment having a different composition from the composition of the base non-aqueous electrolytic solution,
wherein at least one of the vessels is constituted so as to be capable of weighing the inner capacity.

2. The non-aqueous electrolytic solution kit according to claim 1, wherein the vessel being capable of weighing the inner capacity is constituted so as to be capable of visualizing the inner capacity.

3. The non-aqueous electrolytic solution kit according to claim 1 or 2, wherein the vessel being capable of weighing the inner capacity is a vessel that can visualize the inner capacity and is marked with degrees.

4. The non-aqueous electrolytic solution kit according to any one of claims 1 to 3, wherein the vessel being capable of weighing the inner capacity is any one of (a) to (c) described below:
(a) vessel storing the base non-aqueous electrolytic solution;
(b) vessel storing the non-aqueous electrolytic solution for adjustment; and
(c) vessel for preparing the base non-aqueous electrolytic solution and the non-aqueous electrolytic solution for adjustment.

5. The non-aqueous electrolytic solution kit according to any one of claims 1 to 4, wherein the acid content of the non-aqueous electrolytic solution is 20 ppm or less in terms of hydrogen fluoride (HF).

6. The non-aqueous electrolytic solution kit according to any one of claims 1 to 5, wherein the color number in Hazen units (APHA) based on JIS K-6901 of the non-aqueous electrolytic solution is 100 or less.

7. The non-aqueous electrolytic solution kit according to any one of claims 1 to 6, wherein the cyclic carbonate is at least one selected from the group consisting of ethylene carbonate, propylene carbonate, fluoroethylene carbonate, vinylene carbonate and vinyl ethylene carbonate.

8. The non-aqueous electrolytic solution kit according to any one of claims 1 to 7, wherein the chain ester is chain carbonate or chain carboxylic acid ester.

9. The non-aqueous electrolytic solution kit according to claim 8, wherein the chain carbonate is at least one selected from the group consisting of dimethyl carbonate, diethyl carbonate and methylethyl carbonate.

10. The non-aqueous electrolytic solution kit according to claim 8 or 9, wherein the chain carboxylic acid ester is at least one selected from methyl acetate, ethyl acetate, propyl acetate, methyl propionate and ethyl propionate.

11. The non-aqueous electrolytic solution kit according to any one of claims 1 to 10, wherein the base non-aqueous electrolytic solution is obtained by dissolving an electrolyte salt in a mixture of cyclic carbonate and chain ester, and the volume ratio of cyclic carbonate and chain ester of the non-aqueous solvent in the base non-aqueous electrolytic solution is 50 : 50.

12. The non-aqueous electrolytic solution kit according to any one of claims 1 to 11, wherein the non-aqueous solvent in the non-aqueous electrolytic solution for adjustment is at least one selected from ethylene carbonate, propylene carbonate, vinylene carbonate, dimethyl carbonate, diethyl carbonate, methylethyl carbonate and methyl propionate.

13. The non-aqueous electrolytic solution kit according to any one of claims 1 to 12, wherein the electrolyte salt contains LiPF₆ and/or LiBF₄.

14. The non-aqueous electrolytic solution kit according to any one of claims 1 to 13, wherein the non-aqueous electrolytic solution kit has plural non-aqueous electrolytic solutions obtained by dissolving an electrolyte salt in a mixture of cyclic carbonate and chain ester as the base non-aqueous electrolytic solution; and has plural non-aqueous electrolytic solutions containing chain ester, which is the same as the chain ester constituting the plural base non-aqueous electrolytic solutions, and an electrolyte salt as the non-aqueous electrolytic solution for adjustment.

15. A method of preparing a non-aqueous electrolytic solution using the non-aqueous electrolytic solution kit according to any one of claims 1 to 14, comprising
mixing the base non-aqueous electrolytic solution and the non-aqueous electrolytic solution for adjustment.
